(19) **Europäisches Patentamt European Patent Office Office européen des brevets**

(11) **EP 4 269 919 B1**

(12) **FASCICULE DE BREVET EUROPEEN**

(45) Date de publication et mention de la délivrance du brevet:
**29.10.2025 Bulletin 2025/44**

(21) Numéro de dépôt: **23167885.5**

(22) Date de dépôt: **14.04.2023**

(51) Classification Internationale des Brevets (IPC):
**F25D 31/00** (2006.01)

(52) Classification Coopérative des Brevets (CPC):
**A23B 4/06; A23B 2/80; A23B 2/82; A23B 4/07; F25D 29/00;** F25B 2600/112; F25D 2600/04; F25D 2600/06

(54) **PROCEDE OPTIMISE DE SURGELATION ET DE DECONGELATION DE PRODUITS ALIMENTAIRES ET AUTRES PRODUITS THERMOSENSIBLES EN ARMOIRE DE SURGELATION**

OPTIMIERTES VERFAHREN ZUM AUFTAUEN UND AUFTAUEN VON NAHRUNGSMITTELN UND ANDEREN WÄRMEEMPFINDLICHEN PRODUKTEN IN EINEM ÜBERGELATIONSSCHRANK

OPTIMIZED METHOD FOR DEEP-FREEZING AND THAWING FOOD PRODUCTS AND OTHER HEAT-SENSITIVE PRODUCTS IN A DEEP-FREEZING CABINET

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **25.04.2022 FR 2203791**

(43) Date de publication de la demande:
**01.11.2023 Bulletin 2023/44**

(73) Titulaire: **L'AIR LIQUIDE, SOCIETE ANONYME POUR L'ETUDE ET L'EXPLOITATION DES PROCEDES GEORGES CLAUDE**
**75007 Paris (FR)**

(72) Inventeur: **PATHIER, Didier**
**78350 Les Loges-En-Josas (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
EP-A2- 1 074 803     WO-A1-2015/068127
US-A- 4 066 011     US-A1- 2017 188 608

• **BART G C J ED - FOURNAISON LAURENCE ET AL: "Estimation of freezing or chilling behavior", INTERNATIONAL JOURNAL OF REFRIGERATION, ELSEVIER, AMSTERDAM, NL, vol. 21, no. 1, 1 January 1998 (1998-01-01), pages 55 - 63, XP004287228, ISSN: 0140-7007, DOI: 10.1016/S0140-7007(97)00070-4**
• **MOHAMED I O ED - SCHIEBER ANDREAS ET AL: "An inverse lumped capacitance method for determination of heat transfer coefficients for industrial air blast chillers", FOOD RESEARCH INTERNATIONAL, ELSEVIER, AMSTERDAM, NL, vol. 41, no. 4, 12 February 2008 (2008-02-12), pages 404 - 410, XP029234937, ISSN: 0963-9969, DOI: 10.1016/J.FOODRES.2008.01.005**

## Description

La présente invention concerne le domaine des procédés de surgélation de produits alimentaires, pharmaceutiques ou encore biologiques.

On sait que les procédés de surgélation, puis de décongélation des produits, ont un impact considérable sur la qualité des produits obtenus.

Ainsi un procédé donnant une congélation trop lente va générer des cristaux de glace de grande taille, donnant lieu à de fortes pertes d'eau lors de la décongélation et par conséquence à une faible qualité des produits.

A contrario une congélation trop rapide entraine une forte consommation d'énergie et peut générer de même des problèmes de qualité, comme par exemple la destruction des cellules sanguines lors de la surgélation trop rapide du sang ou l'éclatement de certains produits sensibles comme les fraises lorsqu'ils sont congelés trop rapidement.

On s'intéresse selon la présente invention à des procédés de surgélation mis en œuvre dans des enceintes de type « armoire » ou « enceinte » (procédés dits en mode « lot » ou « batch » contrairement aux procédés à défilement continu en tunnel). On citera par exemple les armoires de surgélation cryogéniques « Cryo-Cabinet » commercialisées par la Demanderesse, ou encore les armoires commercialisées par la société ACFRI.

Ces équipements sont classiquement constitués d'une enceinte isolante pourvue d'une porte d'accès permettant de déposer les produits chauds à l'intérieur et de sortir les produits après leur surgélation. En fonctionnement, la porte est close et l'enceinte est fermée. Une source froide apporte le froid nécessaire pour atteindre la consigne de température. Cette source froide peut être une injection de fluide cryogénique ou un échangeur thermique d'un groupe de froid mécanique. Une ventilation interne permet de faire circuler le froid ainsi apporté et de faciliter les transferts thermiques avec le produit à surgeler. L'ensemble des paramètres (température, puissance de ventilation) est ajustable en fonction du procédé et la durée de surgélation est, elle aussi, ajustable.

Quand un produit a été congelé dans de telles armoires à l'aide d'un procédé traditionnel, i.e. à température de congélation constante dans le temps, utilisant un coefficient de transfert thermique constant dans le temps, la surface du produit est congelée beaucoup plus vite que le cœur du produit. Cela entraine comme conséquence le fait que la qualité, les caractéristiques du produit n'est/ne sont pas identique(s) au sein du volume du produit, ce qui représente une véritable problématique pour certains produits, médicaux, biologiques, ou pour certaines protéines, ou encore pour certains fruits délicats.

Ce domaine technique a bien entendu proposé dans le passé des solutions à cette problématique, comme par exemple des technologies de congélation à grande vitesse de type vitrification, vitrification qui donne de très bon résultats mais qui convient essentiellement pour de tout petits produits. WO 2015/068127 A1, US 2017/188608 A1, US 4 066 011 A, décrivent des procédés de refroidissement rapide et/ou de décongélation rapide de l'état de la technique.

La présente invention s'attache à proposer une solution technique à la problématique décrite ci-dessus.

Pour cela, on propose ici de maintenir une vitesse de surgélation constante durant tout le procédé, en d'autres termes, le front de surgélation se déplace vers le centre du produit à une vitesse donnée et constante.

Cela signifie aussi que chaque portion du produit va être congelée en un temps donné et fixé.

La surface du produit n'est alors pas congelée plus rapidement que le cœur du produit.

Pour réaliser cela, on met en œuvre l'un des modes de réalisation suivants :

- Selon un premier mode de réalisation, la température régnant dans l'installation n'est pas constante, elle est relativement élevée (i .e pas trop froide) en début de procédé et plus froide en fin de procédé pour stimuler la surgélation qui ralentit.
- Selon un second mode de réalisation, on fixe la température régnant dans l'enceinte à une consigne fixe et donnée, tandis que le coefficient de transfert thermique est lui réglé pour être faible en début de procédé et plus élevé en fin de procédé (pour cela, la vitesse de ventilation est lente au début du cycle de surgélation et plus élevée en fin de surgélation).
- Selon un troisième mode, on associe les deux modes précédents (variation de la température et variation du coefficient de transfert thermique).

On peut par exemple considérer la formulation d'évaluation suivante :

Température du procédé = k x temps écoulé depuis le début du procédé de surgélation (temps exprimé en secondes) + A

Dans le cas où A=+5°C, on obtient une température de surgélation qui débute à +5°C et qui va progressivement et linéairement descendre à -20 ou -40 ou -60°C suivant le temps qui se sera écoulé.

Pour un procédé de surgélation, le coefficient k est négatif, une valeur basse de k (i.e une grande valeur absolue et négative) entraine une vitesse de surgélation rapide. Par exemple, si k = -1/60, nous aurons une vitesse de descente en froid égale à 1°C par minute. Si par contre k = -10/60, nous aurons une descente en froid beaucoup plus rapide, égale à 10°C par minute.

Le même type d'évaluation peut se faire pour le procédé de décongélation, avec un coefficient k qui est positif :

Température du produit = k x temps écoulé depuis le début du procédé de décongélation + A.

On présente ci-dessous les résultats de simulations réalisées dans les conditions de l'invention ou bien dans des conditions comparatives (art antérieur).

On peut faire la remarque générale suivante sur ces simulations : les courbes ci-dessous ont été obtenues par simulation mais les expérimentations ont montré que ces simulations s'approchent très efficacement de la réalité.

De plus en complément d'expérimentations « réelles », il faut souligner qu'il est utile de réaliser également, des calculs par simulation pour bien comprendre les phénomènes physiques. En effet, alors qu'une expérience donne seulement un résultat macroscopique (produit bien surgelé ou non, aspect etc), une simulation permet de comprendre ce qui s'est très probablement produit durant la surgélation. Cela permet de comprendre ce qui se passe précisément dans toutes les couches du produit (courbe de température millimètre par millimètre dans l'épaisseur du produit) et non plus seulement d'avoir une température moyenne.

On a ainsi fait des essais pratiques dans des conditions proches de celles utilisées pour les simulations rapportées ci-dessous, et l'on constate, on confirme, la même tendance (par exemple une vitesse de surgélation constante en appliquant la technique décrite).

En l'occurrence, dans ce cas, le produit était non surgelé au début. Le produit utilisé (un gel de tylose dans une expérience et de la viande rouge dans une autre expérience) avait la propriété de changer de couleur lorsqu'il était surgelé. Une tranche de produit a alors été surgelée sur une seule de ses faces, et l'on a pu alors constater sur les autres faces l'avance du front de surgélation.

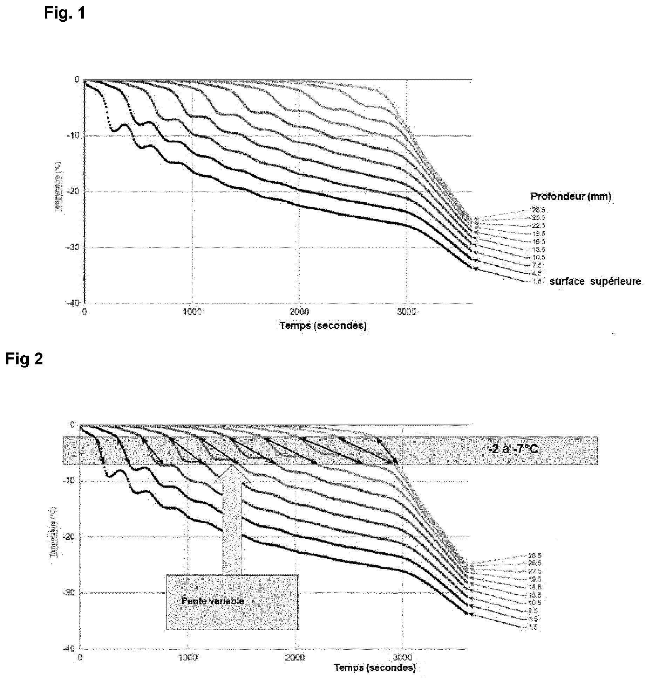

Ainsi les Fig. 1 et Fig. 2 annexées présentent les résultats d'une simulation d'un procédé de surgélation selon l'art antérieur ("standard") dans une telle armoire de surgélation, i.e. avec une température de congélation constante dans le temps, utilisant un coefficient de transfert thermique constant dans le temps.

Cette simulation a été effectuée en utilisant les paramètres suivants :

- produit : du bœuf 5% MG (propriétés thermiques proches du gel de tylose)
- température initiale = 0°C
- épaisseur 30mm, viande posée sur une couche de 30mm d'isolant pour supprimer les échanges par sa face inférieure
- Surgélateur = un Cryo Cabinet (L'AIR LIQUIDE) avec une température constante de -51°C et une ventilation constante réglée à 100% (pleine capacité).

Nous obtenons alors une congélation à -28°C en moyenne en 1 heure avec une température de consigne du congélateur fixée à -51°C.

La Figure 1 et la figure 2 représentent différentes courbes de température d'un produit, en fonction du temps, une courbe pour chaque profondeur à l'intérieur du produit.

Et l'on visualise pour chaque courbe une flèche dans le haut de la courbe, représentant la vitesse de surgélation, vitesse élevée en début de procédé (quasi verticale) et plus faible en fin de procédé (flèches tendant presque vers le plat).

De plus, les flèches sont proches au début et espacées à la fin ce qui traduit un front de congélation avec une avance rapide au début et plus lente à la fin.

On visualise bien ainsi le fait que selon l'art antérieur, la surface du produit est congelée beaucoup plus vite que le cœur selon l'art antérieur.

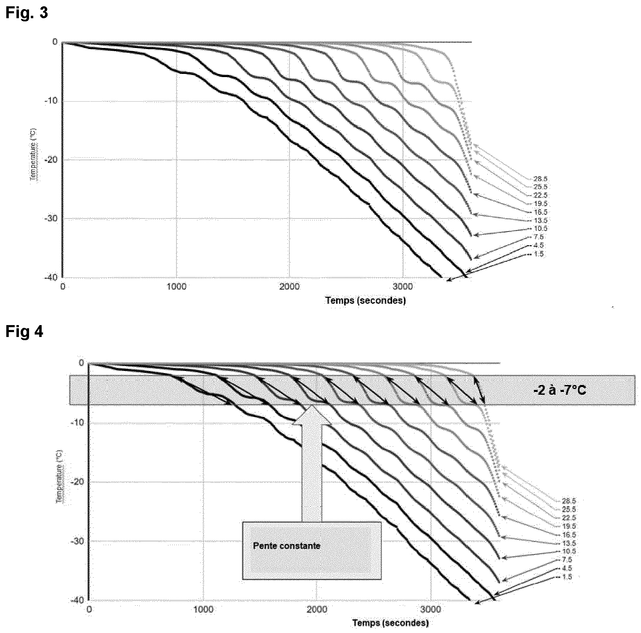

Les Fig. 3 et Fig. 4 annexées présentent quant à elle les résultats d'une simulation d'un procédé de surgélation selon la présente invention dans une telle armoire de surgélation, mettant en œuvre une vitesse de surgélation constante.

Cette simulation a été effectuée en utilisant les paramètres suivants :

- produit : du bœuf 5% MG (propriétés thermiques proches du gel de tylose)
- température initiale = 0°C
- épaisseur 30mm, viande posée sur une couche de 30mm d'isolant pour supprimer les échanges par sa face inférieure
- Surgélateur = un Cryo Cabinet avec une température variable égale à :

$$T = - (90 \text{ x temps en secondes}) / 3600$$

3

La température varie donc de manière linéaire de 0 à -90°C en 1 heure et une ventilation constante réglée à 100% (pleine capacité).

Nous obtenons une congélation à -28°C en moyenne en 1 heure avec une température de consigne du surgélateur qui a variée de 0°C à -90°C.

Ici encore, ces Figures 3 et 4 représentent différentes courbes de température en fonction du temps, une courbe pour chaque profondeur à l'intérieur du produit.

Et l'on visualise ici encore pour chaque courbe une flèche dans le haut de la courbe, représentant la vitesse de surgélation, vitesse qui est ici sensiblement constante. Plus précisément, on voit que dans la zone qui nous intéresse c'est-à-dire dans la zone de surgélation, là où l'eau se transforme en glace, nous avons maintenant des pentes (vitesse de surgélation) qui sont en effet constantes.

De plus, les flèches sont plus ou moins équidistantes, ce qui signifie que le front de congélation avance à une vitesse constante. C'est effectivement ce que l'on constate dans les essais avec du produit réel sur la tranche du produit.

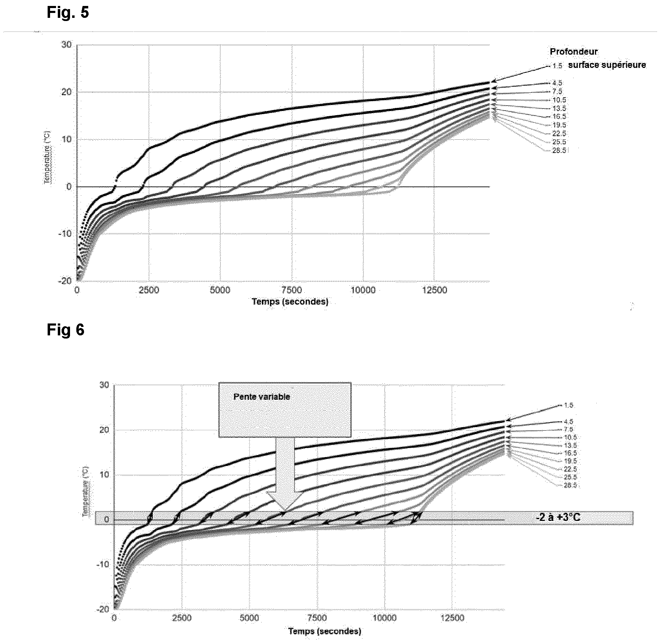

Nous pouvons maintenant nous reporter aux Fig. 5 et Fig. 6 annexées, qui présentent les résultats d'une simulation d'un procédé de décongélation selon l'art antérieur ("standard") dans un équipement de type armoire.

Cette simulation a été effectuée en utilisant les paramètres suivants :

- produit : du bœuf 5% MG (propriétés thermiques proches du gel de tylose)
- température initiale = -20°C
- épaisseur 30mm, viande posée sur une couche de 30mm d'isolant pour supprimer les échanges par sa face inférieure
- Appareil = armoire de réchauffage avec une température fixe égale à +31°C et une ventilation constante réglée à 100% (pleine capacité).

Nous obtenons une décongélation complète à +17°C en moyenne en 4 heures avec une température de consigne du surgélateur fixée à +31°C.

Ces figures représentent différentes courbes de température d'un produit, en fonction du temps, une courbe de décongélation pour chaque profondeur à l'intérieur du produit.

Et l'on visualise pour chaque courbe une flèche dans le bas de la courbe, représentant la vitesse de décongélation (de remontée en température), vitesse élevée en début de procédé (quasi verticale) et plus faible en fin de procédé (flèches tendant presque vers le plat).

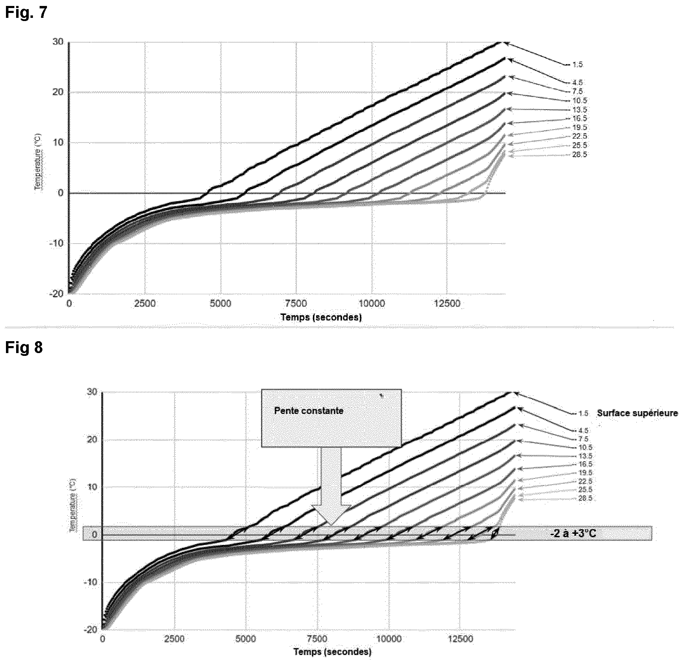

En revanche, les Fig. 7 et Fig. 8 annexées présentent les résultats d'une simulation d'un procédé de décongélation conforme à l'invention, dans une telle armoire, mettant en œuvre une vitesse de décongélation constante, et l'on visualise bien le fait que les pentes, les vitesses de décongélation, sont constantes au fil des courbes, au fil des profondeurs.

Cette simulation a été effectuée en utilisant les paramètres suivants :

- produit : du bœuf 5% MG (propriétés thermiques proches du gel de tylose)
- température initiale = -20°C
- épaisseur 30mm, viande posée sur une couche de 30mm d'isolant pour supprimer les échanges par sa face inférieure
- Appareil = armoire de réchauffage avec une température variable égale à :

$$T = + (50 \times temps\ en\ secondes) / 3600 / 4$$

(la température varie de manière linéaire de 0 à +50°C en 4 heures) et une ventilation constante réglée à 100% (pleine capacité).

Nous obtenons une décongélation complète à +17°C en moyenne en 4 heures avec une température de consigne du surgélateur qui a varié de 0°C à +50°C.

On voit bien en résumé que l'invention, tant en terme de congélation que de décongélation, offre des conditions permettant d'améliorer la qualité des produits congelés et décongelés, en particulier des produits fragiles.

**Revendications**

1. Procédé de surgélation de produits, notamment de produits alimentaires, pharmaceutiques ou encore biologiques, dans lequel les produits sont soumis dans une enceinte de type armoire de surgélation à un transfert de froid, **se caractérisant en ce que** les produits sont soumis à une vitesse de surgélation constante durant tout le procédé, par la mise en œuvre de l'un ou chacun des modes de réalisation suivants :

- Un premier mode où le coefficient de transfert thermique est constant et le profil de température régnant dans l'enceinte au cours du procédé est tel que la température régnant dans l'enceinte n'est pas constante : elle est élevée en début de procédé et plus froide en fin de procédé pour stimuler la surgélation qui ralentit, par le fait que la température initiale en début de procédé est comprise entre +10°C et -10°C, tandis que la température finale en fin de procédé est comprise entre -20 °C et -150°C, tandis que la vitesse de descente en froid est durant la surgélation comprise entre 1°C et 0.001 °C/seconde,
- Un second mode où la température régnant dans l'enceinte au cours du procédé est constante dans le temps, telle que fixée à une consigne donnée, tandis que le coefficient de transfert thermique est lui réglé pour être faible en début de procédé et plus élevé en fin de procédé, par le fait que la vitesse de rotation du ou des ventilateurs présent(s) dans l'armoire est en début de procédé comprise entre 1 et 10% de leur pleine vitesse tandis que la vitesse de rotation du ou des ventilateurs présent(s) dans l'armoire est en fin de procédé comprise entre 50 et 100% de leur pleine vitesse.

2. Procédé de décongélation de produits, notamment de produits alimentaires, pharmaceutiques ou encore biologiques, dans lequel les produits sont soumis dans une enceinte de type armoire de surgélation à un profil de remontée en température, **se caractérisant en ce que** les produits sont soumis à une vitesse de décongélation constante durant tout le procédé, par la mise en œuvre de l'un ou chacun des modes de réalisation suivants :

- Selon un premier mode de réalisation, la température régnant dans l'installation n'est pas constante, elle est en début de procédé comprise entre +10°C et -10°C, tandis que la température finale est comprise entre +10 °C et +80°C, et la vitesse de remontée en température est durant la décongélation comprise entre 1°C/s et 0.001 °C/seconde,
- Selon un second mode de réalisation, on fixe la température régnant dans l'enceinte à une consigne fixe et donnée, tandis que le coefficient de transfert thermique est lui réglé pour être faible en début de procédé et plus élevé en fin de procédé, par le fait que la vitesse de rotation du ou des ventilateurs présent(s) dans l'armoire est lente au début du cycle de décongélation et plus élevée en fin de décongélation, la vitesse de rotation étant en début de procédé comprise entre 1 et 10% de la pleine vitesse et comprise entre 50 et 100% de la pleine vitesse en fin de procédé.

**Patentansprüche**

1. Verfahren zum Tiefgefrieren von Produkten, insbesondere von Lebensmitteln, pharmazeutischen oder biologischen Produkten, bei dem die Produkte in einem schrankartigen Tiefkühlraum einem Kältetransfer unterzogen werden, **dadurch gekennzeichnet, dass** die Produkte während des gesamten Verfahrens einer konstanten Tiefkühlgeschwindigkeit unterzogen werden, durch die Umsetzung eines oder jedes der folgenden Ausführungsmodi:

- Ein erster Modus, bei dem der Wärmeübergangskoeffizient konstant ist und das während des Verfahrens im Raum herrschende Temperaturprofil so ist, dass die im Raum herrschende Temperatur nicht konstant ist: sie ist zu Beginn des Verfahrens hoch und am Ende des Verfahrens kälter, um das sich verlangsamende Tiefgefrieren zu stimulieren, dadurch, dass die Anfangstemperatur zu Beginn des Verfahrens zwischen +10°C und - 10°C liegt, während die Endtemperatur am Ende des Verfahrens zwischen -20°C und -150°C liegt, während die Geschwindigkeit des Temperaturabfalls während des Tiefgefrierens zwischen 1°C und 0.001 °C/Sekunde liegt,
- Ein zweiter Modus, bei dem die während des Verfahrens im Raum herrschende Temperatur zeitlich konstant ist, wie auf einen gegebenen Sollwert festgelegt, während der Wärmeübergangskoeffizient seinerseits so eingestellt ist, dass er zu Beginn des Verfahrens niedrig und am Ende des Verfahrens höher ist, dadurch, dass die Drehzahl des oder der im Schrank vorhandenen Lüfter zu Beginn des Verfahrens zwischen 1 und 10% ihrer vollen Geschwindigkeit liegt, während die Drehzahl des oder der im Schrank vorhandenen Lüfter am Ende des Verfahrens zwischen 50 und 100% ihrer vollen Geschwindigkeit liegt.

2. Verfahren zum Auftauen von Produkten, insbesondere von Lebensmitteln, pharmazeutischen oder biologischen Produkten, bei dem die Produkte in einem schrankartigen Tiefkühlraum einem Temperaturanstiegsprofil unterzogen werden, **dadurch gekennzeichnet, dass** die Produkte während des gesamten Verfahrens einer konstanten Auftaugeschwindigkeit unterzogen werden, durch die Umsetzung eines oder jedes der folgenden Ausführungsmodi:

- Nach einem ersten Ausführungsmodus ist die in der Anlage herrschende Temperatur nicht konstant, sie liegt zu Beginn des Verfahrens zwischen +10°C und -10°C, während die Endtemperatur zwischen +10°C und +80°C liegt, und die Geschwindigkeit des Temperaturanstiegs während des Auftauens liegt zwischen 1°C/s und 0.001 °C/Sekunde,

- Nach einem zweiten Ausführungsmodus wird die im Raum herrschende Temperatur auf einen festen und gegebenen Sollwert festgelegt, während der Wärmeübergangskoeffizient seinerseits so eingestellt ist, dass er zu Beginn des Verfahrens niedrig und am Ende des Verfahrens höher ist, dadurch, dass die Drehzahl des oder der im Schrank vorhandenen Lüfter zu Beginn des Auftauzyklus langsam und am Ende des Auftauens höher ist, wobei die Drehzahl zu Beginn des Verfahrens zwischen 1 und 10% der vollen Geschwindigkeit liegt und am Ende des Verfahrens zwischen 50 und 100% der vollen Geschwindigkeit liegt.

**Claims**

1. A method for deep-freezing products, in particular food, pharmaceutical or biological products, wherein the products are subjected in a cabinet-type deep-freezing enclosure to a cold transfer, **characterized in that** the products are subjected to a constant deep-freezing speed throughout the entire process, by implementing one or each of the following operating modes:

   - A first mode wherein the heat transfer coefficient is constant and the temperature profile prevailing in the enclosure during the process is such that the temperature prevailing in the enclosure is not constant: it is high at the beginning of the process and colder at the end of the process to stimulate the slowing deep-freezing, by the fact that the initial temperature at the beginning of the process is comprised between +10°C and -10°C, while the final temperature at the end of the process is comprised between -20°C and -150°C, while the rate of temperature decrease during deep-freezing is comprised between 1°C and 0.001 °C/second,
   - A second mode wherein the temperature prevailing in the enclosure during the process is constant over time, as fixed at a given setpoint, while the heat transfer coefficient is itself adjusted to be low at the beginning of the process and higher at the end of the process, by the fact that the rotational speed of the fan(s) present in the cabinet is at the beginning of the process comprised between 1 and 10% of their full speed while the rotational speed of the fan(s) present in the cabinet is at the end of the process comprised between 50 and 100% of their full speed.

2. A method for defrosting products, in particular food, pharmaceutical or biological products, wherein the products are subjected in a cabinet-type deep-freezing enclosure to a temperature rise profile, **characterized in that** the products are subjected to a constant defrosting speed throughout the entire process, by implementing one or each of the following operating modes:

   - According to a first operating mode, the temperature prevailing in the installation is not constant, it is at the beginning of the process comprised between +10°C and -10°C, while the final temperature is comprised between +10°C and +80°C, and the rate of temperature rise during defrosting is comprised between 1°C/s and 0.001 °C/second,
   - According to a second operating mode, the temperature prevailing in the enclosure is fixed at a fixed and given setpoint, while the heat transfer coefficient is itself adjusted to be low at the beginning of the process and higher at the end of the process, by the fact that the rotational speed of the fan(s) present in the cabinet is slow at the beginning of the defrosting cycle and higher at the end of defrosting, the rotational speed being at the beginning of the process comprised between 1 and 10% of the full speed and comprised between 50 and 100% of the full speed at the end of the process.

**Fig. 1**

**Fig 2**

**Fig. 3**

Température (°C) / Temps (secondes)

28.5
25.5
22.5
19.5
16.5
13.5
10.5
7.5
4.5
1.5

**Fig 4**

-2 à -7°C

Pente constante

28.5
25.5
22.5
19.5
16.5
13.5
10.5
7.5
4.5
1.5

Température (°C) / Temps (secondes)

**Fig. 5**

**Fig 6**

**Fig. 7**

**Fig 8**

**RÉFÉRENCES CITÉES DANS LA DESCRIPTION**

**Documents brevets cités dans la description**

- WO 2015068127 A1
- US 2017188608 A1
- US 4066011 A